# EUROPEAN PATENT APPLICATION

(11) **EP 4 535 259 A1**
(43) Date of publication of application: **09.04.2025**
(21) Application number: 23306722.2
(22) Date of filing: 06.10.2023
(51) Int. Cl.: G06Q 10/1053

(54) **METHOD AND SYSTEM FOR AUTOMATICALLY EVALUATING A CANDIDATE**

(71) Applicant: BULL SAS, 78340 Les Clayes-Sous-Bois (FR)
(72) Inventor: PATANKAR, Dheeraj, MAHARASHTRA (IN)
(74) Representative: Argyma

(57) **Abstract**

The invention relates to a method for automatically evaluating a candidate using a set of questions implemented by an automatic evaluation system, comprising a control module, a database, a user interface and a language model module, the method, comprising a first phase being iterative and comprising, at each iteration, the steps of selecting (E1) a question, sending (E2) the selected question to said user interface, receiving (E5) a candidate's answer, requesting (E7) said language model module for an accuracy score reflecting the accuracy of the candidate's answer relatively to a model answer, receiving (E9) the requested accuracy score, said iterative first phase being carried out until an accuracy score has been received, and a second phase comprising the steps of: computing (E11) an evaluation score of the candidate using the received accuracy scores.

## Description

### [Field of the invention]

The field of the invention relates to the evaluation of a candidate and more particularly to a method, a control module and a system for automatically evaluating a candidate.

### [Background of the invention]

Most of the recruiting processes in any industry requires an evaluation of the technical abilities and knowledge of the candidate regarding the position they are applying for and the level of experience.

This evaluation usually requires asking the candidate a list of technical questions about the field of the position and its difficulty to assess their skill level based on their answers.

This process can be time consuming, as most of the time it takes a person to orally ask the questions to the candidate. Depending on the position and the number of candidates, it can take a large amount of time for the interviewer.

Another drawback of this process is that the subjectivity of the interviewer regarding the candidate may alter their evaluation and lead to reject a candidate, who may however be suitable for the position or, on the contrary, hire a candidate, which will eventually prove to be unsuitable for the position.

A known solution to try to remedy these problems is to use an evaluation software to run through a set of questions and collect the corresponding answers of the candidate, thus avoiding the time loss for the interviewers.

However, this solution still requires a human analysis of the collected answers as such a software is usually not able to assess by itself the validity of the technical answers of the candidates.

A known solution to try to address this issue is to use a multiple-choice questionnaire, but this requires questions that are simple enough and that may thus not be accurate enough for a complex position with a specific and thorough set of skills, such as e.g., a technical position.

It is therefore an object of the present invention to provide an easy, reliable and efficient method and device to solve at least partly the drawbacks of the prior art.

### [Summary of the invention]

To this end, the present invention concerns a method for automatically evaluating a candidate using a set of questions, said method being implemented by an automatic evaluation system, said automatic evaluation system comprising a control module, a database comprising said set of questions, a user interface and a language model module, the method, preferably implemented by said control module, comprising:
- a first phase being iterative and comprising, at each iteration, the steps of:
- selecting, in the database, a question from the set of questions, said selected question being different from the questions selected at previous iterations, if any,
- sending the selected question to said user interface,
- receiving a set of words corresponding to a candidate's answer to the sent question,
- requesting said language model module for an accuracy score using said received set of words, said accuracy score reflecting the accuracy of the candidate's answer relatively to a model answer,
- receiving the requested accuracy score,
the iterative first phase being carried out until a predeterminate condition has been reached,
- a second phase comprising the step of computing an evaluation score of the candidate using the received accuracy scores of all the questions of the set of questions.

The predeterminate condition which triggers the end of the iterative first phase may be a number of submitted questions or a predeterminate accuracy score reached.

In a preferred embodiment, the method comprises:
- before the first phase, a preliminary step of attributing to each question of the set of questions a set of expected keywords,
- during the first phase, a step of generating the accuracy score by comparing the received set of words with the set of expected keywords.

These two steps are preferably carried out by the control module.

The method according to the invention allows to conduct an evaluation of a candidate automatically, which saves time for the interviewers. The method according to the invention also allows to remove bias from the process leading to a fair evaluation process. The method according to the invention also allows to ensure that technical skills of the incoming candidate are at an appropriate level. The method according to the invention also allows to leverage the same process for selecting an internal or external candidate.

In a preferred embodiment, the method comprises a step of generating the accuracy score by the language model module, said step comprising analyzing the structure and the relevance of the received set of words. This allows to conduct an evaluation of a candidate objectively since there is no human bias in the scoring done by the language model module on the candidate's answers.

In a preferred embodiment, the method comprises:
- before the first phase, a preliminary step of building at least one model using large data of prior interviews responses and scores, said model allowing to predict the quality of an answer based on features like correctness, completeness and/or clarity,
- during the first phase, a step of generating the accuracy score by the language model module by using said built-in model.

The built-in model allows to adjust the scoring to the preferred accuracy for the evaluation method.

Advantageously, the method comprises, during the first phase, a step of generating the accuracy score by the language model module by classifying the received set of words to predetermined rubrics and assign scores accordingly. This allows some flexibility in the answers from the candidate if said answers are relevant to the question and its technical field.

Advantageously, the method comprises, after the second phase, a step of evaluating, by the control module, the candidate based on said computed evaluation score. A manager may directly access the evaluation instead of evaluating themselves the candidate from the score given by the method.

Alternatively, the method may comprise a step of evaluating the candidate based on said computed evaluation score by an interviewer or any human user.

Preferably, the method comprises a step of submitting the selected question to the candidate via the user interface.

Advantageously, the selected question is submitted to the candidate via a display screen of the user interface.

Advantageously, the method comprises, prior to submitting the selected question to the user interface, a step of converting the words of the selected question into an audio stream by a text conversion module, providing said audio stream to the user interface and diffusing said received audio stream by the user interface to the candidate. An audio stream may be considered as more convenient for the candidate for receiving the question.

Advantageously, the method comprises, when the answer has been given orally by the candidate, a step of recording said oral answer as an audio stream and converting said audio stream into a set of words by an audio conversion module. Giving an oral answer may be considered as more convenient for the candidate.

According to an aspect of the invention, the method comprises, before the first phase, a preliminary step of attributing a difficulty level to each question of the set of questions. The difficulty levels may be defined based on the complexity of the questions to be asked for a given position e.g. Basic questions (level 1), Intermediate questions (level 2), Advanced questions (level 3), Expert questions (level 4).

According to another aspect of the invention, the step of selecting a question comprises determining a question difficulty level based on the accuracy of at least one of the previous answers given by the candidate and selecting a question having said determined difficulty level. This allows to assess the candidate faster, as the method will not submit them questions of lower difficulty if the candidate has already a higher accuracy score by correctly answering a certain number of questions at a given difficulty level.

Advantageously, the method comprises, before the first phase, a preliminary step of storing the candidate's basic information and skills, preferably in the database.

Preferably, the first question is selected based on the stored candidate's basic information and skills. Preferably, basic information comprises the age, the gender, the current position, the skills and experience of the candidate, which position the candidate is applying to, etc. For example, a male candidate of 22 years having 3 years of experience applying for a Java developer position.

These pieces of information may constitute a relevant starting point. The present invention also relates to a computer program comprising instructions which, when the program is executed by a computer, cause the computer to carry out the steps of the method as described.

The present invention also relates to a control module for automatically evaluating a candidate using a set of questions in an automatic evaluation system, said automatic evaluation system comprising said control module, a database comprising said set of questions, a user interface and a language model module, the control module being configured to:
- in an iterative first phase:
- select, in the database, a question from the set of questions, said selected question being different from the questions selected at previous iterations, if any,
- send the selected question to said user interface,
- receive a set of words corresponding to a candidate's answer to the sent question,
- request said language model module for an accuracy score using said received set of words, said accuracy score reflecting the accuracy of the candidate's answer relatively to a model answer,
- receive the requested accuracy score,
the iterative first phase being carried out until a predeterminate condition has been reached,
- in a second phase, compute an evaluation score of the candidate using the received accuracy scores of all the questions of the set of questions.

The predeterminate condition which triggers the end of the iterative first phase may be a number of submitted questions or a predeterminate accuracy score reached.

The present invention also relates to a control module configured to, after the second phase, evaluate the candidate based on said computed evaluation score.

In an embodiment, the control module is configured to:
- before the first phase, attribute to each question of the set of questions a set of expected keywords,
- during the first phase, generate the accuracy score by comparing the received set of words with the set of expected keywords.

In an embodiment, the language model module is configured to generate the accuracy score by analyzing the structure and the relevance of the received set of words.

In an embodiment, the language model module is configured to, before the first phase, build at least one model using data of prior interviews responses and scores or data provided by at least one interviewer, said model allowing to predict the quality of an answer based on features like correctness, completeness and/or clarity, and, during the first phase, generate the accuracy score by using said built model.

In an embodiment, the language model module is configured to, during the first phase, generate the accuracy score by classifying the received set of words to predetermined rubrics and assign scores accordingly.

Alternatively, the evaluation of the candidate based on said computed evaluation score may be carried out by an interviewer or any human user.

In an embodiment, the control module is configured to submit the selected question to the candidate via the user interface.

Advantageously, the selected question is submitted to the candidate via a display screen of the user interface.

In an embodiment, the control module is configured to, before the first phase, attribute a difficulty level to each question of the set of questions. Based on the nature of the position, the control module may increase the difficulty level along the interview based on the answers provided by the candidate to the questions of the set.

In an embodiment, the control module is configured to, when selecting a question, determine a question difficulty level based on the accuracy of at least one of the previous answers given by the candidate and select a question having said determined difficulty level.

Advantageously, the control module is configured to, before the first phase, store the candidate's basic information and skills (in the database).

Preferably, the control module is configured to select the first question based on the stored candidate's basic information and skills.

The present invention also relates to an automatic evaluation system comprising a control module as described before, a database comprising the set of questions, a user interface and a language model module, said system being configured to carry out the method as described before.

In an embodiment, the automatic evaluation system comprises a text conversion module configured to convert the words of a selected question into an audio stream and provide said audio stream to the user interface for diffusion.

In an embodiment, the automatic evaluation system comprises an audio conversion module configured to receive an audio stream of a candidate's answer, convert said received audio stream into a set of words and send said set of words to the control module.

### [Brief description of the drawings]

These and other features, aspects, and advantages of the present invention are better understood with regards to the following Detailed Description of the Preferred Embodiments, appended Claims, and accompanying Figures, where:
FIGURE 1 schematically illustrates an embodiment of the automatic evaluation system according to an aspect of the invention.

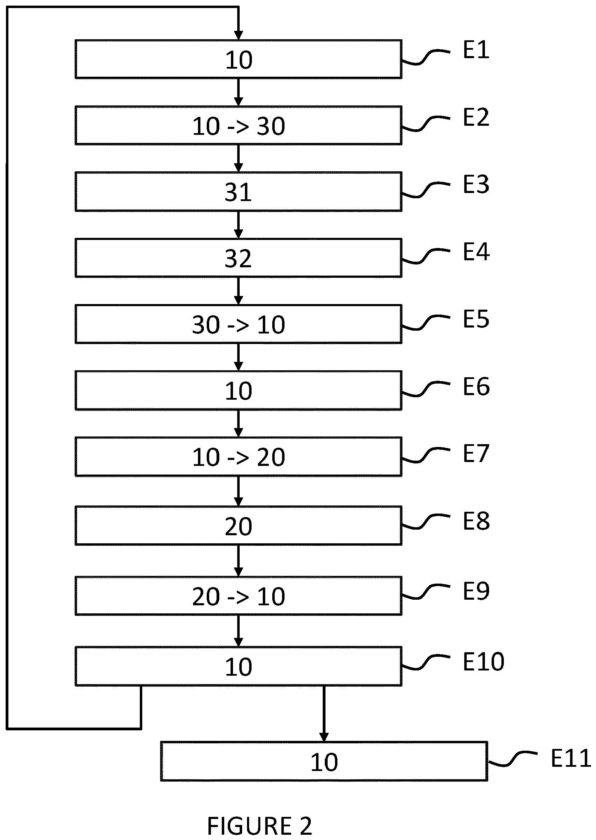

FIGURE 2 schematically illustrates an embodiment the method of automatic evaluation according to an aspect of the invention.

### [Detailed description]

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claims.

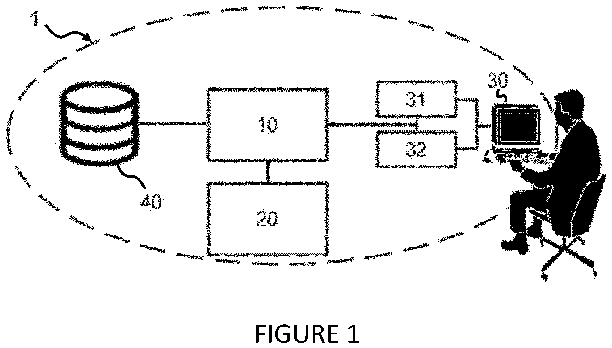

As represented on figure 1, the automatic evaluation system 1 comprises a control module 10, a language model module 20, a user interface 30 and a database 40.

### Control module 10

The control module 10 is configured to select a question in a set of questions based on a criterium, such as the basic information on the candidate stored in the database 40 or an accuracy score from a previous iteration of the method.

The control module 10 is configured to send the selected question to the user interface 30 and to receive a set of words corresponding to a candidate's answer to the sent question.

The control module 10 is configured to build a request comprising said set of words, to send the request to the language model module 20 and to receive an accuracy score.

The control module 10 is configured to compute an evaluation score of the candidate using the received accuracy scores.

### Language model module 20

The language model module 20 is configured to receive a request in the form of a string of words and return an accuracy score after processing the request.

The language model module 20 may function based on artificial intelligence and large language models to process the string of words and determine an accuracy score.

The language model module 20 may function based on pre-existing large language models such as ChatGPTO or a model built for this application.

The language model module 20 may alternatively be located outside of the automatic evaluation system 1 and exchange with the control module 10.

### User interface 30

The user interface 30 is configured to receive a question as a text file and to submit it to a candidate. The user interface 30 further comprises a text conversion module 31 and an audio conversion module 32.

The user interface 30 may comprise a screen, a keyboard, a sound system and a recording system.

The user interface 30 may submit visually the question by prompting it on the screen, and/or using the text conversion module 31 to synthetize an oral question addressed to the candidate.

The user interface 30 is configured to retrieve the answer of the candidate and send it to the control module 10.

The user interface 30 may retrieve an answer typed by the candidate on the keyboard, and/or record an oral answer and transform it into a string of words using the audio conversion module 32.

### Database 40

The database 40 is an electronical storage unit comprised in a computer or a server.

The database 40 is configured to store the set of questions and the candidate's basic information. The database 40 may be a separate entity or embedded into the control module 10.

The set of questions comprises several questions stored as text files.

Each question of the set of questions has a difficulty level attributed.

Each question of the set of questions has a set of keywords associated with the answer of said question attributed.

After the evaluation is completed, the accuracy scores of the candidate to each question, their final accuracy score and their evaluation are also stored in the database 40.

### Example of operation

When a candidate is set to be evaluated using the automatic evaluation system 1, the first step of the method is to store basic information about the candidate in a database 40 prior to the evaluation per se.

The basic information may include the position in the case of a job interview, the candidate's age, the candidate's gender, the candidate's experiences, the candidate's skills, etc.

When the method for automatic evaluation begins, the control module 10 retrieves from the database 40 the basic information of candidate.

The control module 10 then selects a question of the set of questions according to the basic information of the candidate in a step E1.

Once the question has been selected, the control module 10 sends the question as a text file to the user interface 30 in a step E2.

The user interface 30 prompts the question on a screen or send an audio file of the question transformed with the text conversion module 31 in a step E3.

The candidate submits their answer to the user interface 30, either by directly typing it as a text file or answering it verbally in a step E4.

If the candidate answers verbally to the question, the audio conversion module 32 transforms the spoken answer in the form of a text file.

The user interface 30 sends the answer to the control module 10 as a text file comprising a set of words in a step E5.

The control module 10 receives the set of words corresponding to the candidate's answer and creates a text request comprising said set of words in a step E6.

The request is sent in a step E7 to the language model module 20 which automatically analyses the request to determine an accuracy score.

In the step E8, the language model module 20 may compare the set of words of the answer with the set of keywords attributed to the question the candidate has answered and calculate a higher accuracy score if most or all the keywords are present in the set of words of the answer.

In the step E8, the language model module 20 may use a natural language program to analyze the set of words of the answer and for instance calculate a higher accuracy score if the text is semantically coherent.

In the step E8, the language model module 20 may compare the set of words of the answers with the stored set of words of previous answers to the same question and calculate an accuracy score based on the accuracy scores of the previous answers to the question that are close to the one given by the current candidate.

Once the language model module 20 has calculated the accuracy score, it sends it to the control module 10 in a step E9.

The control module 10 stores the accuracy score of the candidate in the database 40 in a step E10.

The control module 10 iterates back to the step E1 and selects another question in the set of questions, according to the accuracy score calculated by the language model module 20.

The method carries on from step E2 and iteratively process until the control module 10 decides that the evaluation is over.

The decision that the evaluation is over can be triggered by the control module 10 when a predeterminate number of questions has been submitted or when a predeterminate accuracy score has been reached.

The control module 10 calculates the final accuracy score in a step E11 and stores it in the database 40.

The control module 10 may store in the step E11 an evaluation of the candidate based on their final accuracy score and accuracy scores during the evaluation.

After the evaluation has been completed, an authorized person, such as a manager in the case of a job application evaluation, can access the final accuracy score, the answers for the questions submitted and the evaluation of the candidate.

The authorized person can submit to the control module 10 feedback on the accuracy scores given to the answers submitted by the candidate to improve the language model module 20.

The device and method according to the invention allow therefore efficiently, rapidly and easily to evaluate a candidate based on a set of questions.

The Specification, which includes the Summary of Invention, Brief Description of the Drawings and the Detailed Description of the Preferred Embodiments, and the appended Claims refer to particular features (including process or method steps) of the invention. Those of skill in the art understand that the invention includes all possible combinations and uses of particular features described in the Specification. Those of skill in the art understand that the invention is not limited to or by the description of embodiments given in the Specification.

## Claims

1. A method for automatically evaluating a candidate using a set of questions, said method being implemented by an automatic evaluation system (1), said automatic evaluation system (1) comprising a control module (10), a database (40) comprising said set of questions, a user interface (30) and a language model module (20), the method, comprising:
- a first phase being iterative and comprising, at each iteration, the steps of:
- selecting (E1), in the database (40), a question from the set of questions, said selected question being different from the questions selected at previous iterations, if any,
- sending (E2) the selected question to said user interface (30),
- receiving (E5) a set of words corresponding to a candidate's answer to the sent question,
- requesting (E7) said language model module (20) for an accuracy score using said received set of words, said accuracy score reflecting the accuracy of the candidate's answer relatively to a model answer,
- receiving (E9) the requested accuracy score,
the iterative first phase being carried out until a predeterminate condition has been reached,
- a second phase comprising the step of computing (E11) an evaluation score of the candidate using the received accuracy scores of all the questions of the set of questions.

2. A method according to claim 1, said method comprising:
- before the first phase, a preliminary step of attributing to each question of the set of questions, a set of expected keywords,
- during the first phase, a step of generating the accuracy score by comparing the received set of words with the set of expected keywords by the control module (10) or by the language model module (20).

3. A method according to any of the preceding claims, said method comprising a step of generating the accuracy score by the language model module (20), said step comprising analyzing the structure and the relevance of the received set of words.

4. A method according to any of the preceding claims, said method comprising:
- before the first phase, a preliminary step of building at least one model using large data of prior interviews responses and scores or data, said model allowing to predict the quality of an answer based on features like correctness, completeness and/or clarity,
- during the first phase, a step of generating the accuracy score by the language model module (20) by using said built model.

5. A method according to any of the preceding claims, said method comprising, during the first phase, a step of generating the accuracy score by the language model module (20) by classifying the received set of words to predetermined rubrics and assign scores accordingly.

6. A method according to any of the preceding claims, said method comprising, after the second phase, a step of evaluating, by the control module (10), the candidate based on said computed evaluation score. Alternatively, the method may comprise a step of evaluating the candidate based on said computed evaluation score by an interviewer or any human user.

7. A method according to any of the preceding claims, said method comprising a step of submitting the selected question to the candidate via the user interface (30).

8. A method according to any of the preceding claims, said method comprising, prior to submitting the selected question to the user interface (30), a step of converting the words of the selected question into an audio stream by a text conversion module (31), providing said audio stream to the user interface (30) and diffusing said received audio stream by the user interface (30) to the candidate.

9. A method according to any of the preceding claims, said method comprising, when the answer has been given orally by the candidate, a step of recording said oral answer as an audio stream and converting said audio stream into a set of words by an audio conversion module (32).

10. A method according to the any of the preceding claims, said method comprising, before the first phase, a preliminary step of attributing a difficulty level to each question of the set of questions.

11. A method according to the preceding claim, wherein the step of selecting a question comprises determining a question difficulty level based on the accuracy of at least one of the previous answers given by the candidate and selecting a question having said determined difficulty level.

12. A computer program comprising instructions which, when the program is executed by a computer, cause the computer to carry out the steps of the method according to any one of the preceding claims.

13. A control module (10) for automatically evaluating a candidate using a set of questions in an automatic evaluation system (1), said automatic evaluation system (1) comprising said control module (10), a database (40) comprising said set of questions, a user interface (30) and a language model module (20), the control module (10) being configured to:
- in an iterative first phase:
- select, in the database (40), a question from the set of questions, said selected question being different from the questions selected at previous iterations, if any,
- send the selected question to said user interface (30),
- receive a set of words corresponding to a candidate's answer to the sent question,
- request said language model module (20) for an accuracy score using said received set of words, said accuracy score reflecting the accuracy of the candidate's answer relatively to a model answer,
- receive the requested accuracy score,
the control module (10) being configured to carry out said iterative first phase until a predeterminate condition has been reached,
- in a second phase, compute an evaluation score of the candidate using the received accuracy scores of all the questions of the set of questions.

14. A control module (10) according to the preceding claim, said control module (10) being configured to, after the second phase, evaluate the candidate based on said computed evaluation score.

15. An automatic evaluation system (1) comprising a control module (10) according to any of claims 13 or 14, a database (40) comprising the set of questions, a user interface (30) and a language model module (20), said system being configured to carry out the method according to any of the preceding claims 1 to 12.
